# EUROPEAN PATENT APPLICATION

(11) **EP 2 642 469 A1**
(43) Date of publication of application: **25.09.2013**
(21) Application number: 11841024.0
(22) Date of filing: 16.11.2011
(51) Int. Cl.: G09F 9/00, G02F 1/1333

(54) **TRANSPARENT PROTECTIVE PLATE, FLAT PANEL DISPLAY, AND METHOD FOR PRODUCING FLAT PANEL DISPLAY**

(30) Priority: 17.11.2010 JP 2010257235
(71) Applicant: Asahi Glass Company, Limited, Tokyo 100-8405 (JP)
(72) Inventor: SASAKI, Koji, Tokyo 100-8405 (JP); TSUKUDE, Noboru, Tokyo 100-8405 (JP); MIYAKO, Takeomi, Tokyo 100-8405 (JP); INOUE, Masahiro, Tokyo 100-8405 (JP)
(74) Representative: Müller-Boré & Partner Patentanwälte
(86) International application number: PCT/JP2011/076448
(87) International publication number: WO 2012/067164

(57) **Abstract**

To provide a transparent protective plate which can easily be attached to a display main body of a flat panel display, and which can suppress e.g. deterioration of properties at the time of attaching. A transparent protective plate to be bonded to a display surface of a display main body of a flat panel display, which comprises a glass substrate having a thickness of from 0.5 to 1.8 mm, and a pressure-sensitive adhesive layer having a thickness of from 20 to 150 µm, comprising a pressure-sensitive adhesive having a pressure-sensitive adhesive strength of at least 0.1 N/25 mm as specified by JIS Z0237, laminated directly or indirectly on the side to be bonded to the display surface of the glass substrate.

## Description

### TECHNICAL FIELD

The present invention relates to a transparent protective plate to be attached to the observer side of a display main body of a flat panel display, a flat panel display using it, and a process for producing a flat panel display. Particularly, it relates to a transparent protective plate which is easily attached to a display main body, a flat panel display using it, and a process for producing a flat panel display.

### BACKGROUND ART

In a flat panel display such as a plasma display or a liquid crystal display, a transparent protective plate is attached to the observer side, so as to protect a display main body and to shield members such as a connector disposed around the periphery of an image display region to provide favorable outer appearance, and to reduce electromagnetic noises and near infrared rays generated from the display main body. As a method of attaching the transparent protective plate to the display main body, a method of fixing it to the display main body with a space therebetween is commonly employed. To suppress scattering of light by the space between the display main body and the transparent protective plate, thus lowering the contrast or the brightness, and to make the flat panel display thin, a method of filling the space with a resin and curing the resin has been known. As the resin employed for such a method, for example, a thermosetting resin or a photocurable resin has been known, and it has also been known to make the resin have a predetermined viscosity or the like to suppress adhesion of the resin to portions other than necessary portions (for example, Patent Document 1).

In addition, a method of disposing an adhesive sheet between the display main body and the transparent protective plate, followed by heat treatment under reduced pressure at high temperature has also been known. Further, as the adhesive sheet, for example, one comprising a hot melt type adhesive has been known (for example, Patent Documents 2 and 3).

### PRIOR ART DOCUMENTS

### PATENT DOCUMENTS

Patent Document 1: JP-A-2009-186956
Patent Document 2: JP-A-2003-58064
Patent Document 3: JP-A-2003-157018

### DISCLOSURE OF INVENTION

### TECHNICAL PROBLEM

However, by the method of disposing an adhesive sheet between the display main body and the transparent protective plate and bonding them, it is necessary to cut the adhesive sheet into a predetermined size at the time of bonding and to dispose it at a predetermined position, and such a method is not necessarily excellent in the productivity. Further, in the case of bonding by the adhesive sheet, it is commonly necessary to carry out a heat treatment at high temperature exceeding 100°C, and such a method is not necessarily excellent in the productivity, and particularly when the transparent protective plate contains various dyes, the dyes may be deteriorated by the heat treatment at high temperature, and the transparent protective plate may undergo discoloration.

Further, also by the method of filling the space between the display main body and the transparent protective plate with a resin to substantially carry out bonding, a treatment to prevent the resin from adhering to portions other than necessary portions is required, and in the case of a thermosetting resin, a heat treatment at high temperature exceeding 100°C is necessary, and such a method is not necessarily excellent in the productivity. Further, like the above method of using an adhesive sheet, the transparent protective plate may undergo discoloration by the deterioration of the dyes.

Further, by the method of using an adhesive sheet or a curable resin when the display main body and the transparent protective plate are bonded, if bubbles or foreign matters are included, it is not possible to peel the protective plate to recycle the display main body.

The present invention has been made to solve the above problems, and its object is to provide a transparent protective plate which is easily attached to a display main body, and which can suppress deterioration of properties at the time of attaching, a flat panel display using such a transparent protective plate, and a process for producing a flat panel display.

### SOLUTION TO PROBLEM

The transparent protective plate of the present invention is one used as bonded to a display surface of a display main body of a flat panel display. The transparent protective plate of the present invention comprises a glass substrate having a thickness of from 0.5 to 1.8 mm, and a pressure-sensitive adhesive layer having a thickness of from 20 to 150 µm, comprising a pressure-sensitive adhesive having a pressure-sensitive adhesive strength of at least 0.1 N/25 mm as specified by JIS Z0237, laminated directly or indirectly on the side to be bonded to the display surface of the glass substrate.

The flat panel display of the present invention is one having a transparent protective plate bonded to a display surface of a display main body. The flat panel display of the present invention comprises the above transparent protective plate of the present invention as the transparent protective plate.

The process for producing a flat panel display of the present invention is to bond the above transparent protective plate of the present invention to a display surface of a display main body, and comprises the following disposing step, bonding step and heat treatment step in this order.

In the disposing step, it is preferred that the transparent protective plate is disposed as being deflected to the display main body side so that the pressure-sensitive adhesive layer faces the display main body and that only one edge is in contact with the display main body.

In the bonding step, it is preferred that the transparent protective plate is brought into contact with the display main body gradually from the above one edge side to the other edge side while the transparent protective plate is deflected to bond them.

Further, in the heat treatment step, it is preferred that the display main body having the transparent protective plate bonded thereto is subjected to a heat treatment in an atmosphere exceeding room temperature and exceeding normal pressure.

### ADVANTAGEOUS EFFECTS OF INVENTION

The transparent protective plate of the present invention, which comprises predetermined glass plate and pressure-sensitive adhesive layer, can easily be attached to a display main body, and can suppress deterioration of properties at the time of attaching. Further, the flat panel display of the present invention, which comprises the transparent protective plate of the present invention, is excellent in the productivity, and its deterioration of properties can be suppressed.

Further, according to the process for producing a flat panel display of the present invention, by using the transparent protective plate of the present invention and by predetermined steps, a flat panel display having favorable outer appearance and properties can easily be produced.

### BRIEF DESCRIPTION OF DRAWINGS

Fig. 1 is a cross-sectional view illustrating one example of a transparent protective plate of the present invention.
Fig. 2 is a cross-sectional view illustrating one example of a flat panel display of the present invention.
Fig. 3 is a view illustrating a process for producing a flat panel display of the present invention.
Fig. 4 is a view illustrating a process for producing a flat panel display of the present invention.
Fig. 5 is a view illustrating a process for producing a flat panel display of the present invention.
Fig. 6 is a view illustrating a process for producing a flat panel display of the present invention.
Fig. 7 is a view illustrating a process for producing a flat panel display of the present invention.
Fig. 8 is a view illustrating a process for producing a flat panel display of the present invention.
Fig. 9 is a view illustrating a process for producing a flat panel display in Example 10.
Fig. 10 is a view illustrating a process for producing a flat panel display in Example 10.
Fig. 11 is a view illustrating a process for producing a flat panel display in Example 10.
Fig. 12 is a view illustrating a process for producing a flat panel display in Example 10.
Fig. 13 is a view illustrating a process for producing a flat panel display in Example 10.
Fig. 14 is a view illustrating a process for producing a flat panel display in Example 10.

### DESCRIPTION OF EMBODIMENTS

Now, embodiments of the present invention will be described in detail.

The transparent protective plate of the present invention is used as bonded to a display main body (display panel) of a flat panel display.

The transparent protective plate of the present invention comprises a glass substrate having a thickness of from 0.5 to 1.8 mm, and a pressure-sensitive adhesive layer having a thickness of from 20 to 100 µm, comprising a pressure-sensitive adhesive having a pressure-sensitive adhesive strength of at least 0.1 N/25 mm as specified by JIS Z0237, laminated directly or indirectly on the side to be bonded to the display surface of the glass substrate.

Such a transparent protective plate, which is preliminarily provided with a pressure-sensitive adhesive layer for bonding to a display main body, can be attached to a display main body simply by bonding, and is excellent in a property of being attached to a display main body. Further, since a heat treatment at high temperature exceeding 100°C as in the case of an adhesive or a thermosetting resin is unnecessary, e.g. deterioration of the transparent protective plate, such as discoloration by deterioration of dyes in a case where dyes are contained for example, can be suppressed. Further, by having a glass substrate having a predetermined thickness and a pressure-sensitive adhesive layer having predetermined pressure-sensitive adhesive strength and thickness, formation of large bubbles between the display main body and the transparent protective plate when they are bonded can be suppressed, and further, the bubbles can be got rid of by the heat treatment, and therefore, one having favorable outer appearance can be obtained.

The glass substrate is one to be a substrate mainly constituting the transparent protective plate. The thickness of the glass substrate is from 0.5 to 1.8 mm. If the thickness of the glass substrate is less than 0.5 mm, no sufficient strength will be obtained, and accordingly, it may be broken when the transparent protective plate is bonded to the display main body, and it may be broken when a chemical tempering treatment is carried out to improve the strength. On the other hand, if the thickness of the glass substrate exceeds 1.8 mm, when the transparent protective plate is bonded to the display main body by the after-mentioned production process, deflection of the transparent protective plate by its own weight tends to be small, large bubbles are likely to form between the display main body and the transparent protective plate and the bubbles may not be got rid of even if a heat treatment is carried out after bonding. The thickness of the glass substrate is preferably from 0.5 to 1.1 mm with a view to making deflection of the transparent protective plate large and effectively suppressing formation of bubbles.

The thickness of the glass substrate is not necessarily limited, however, particularly remarkable effects can be obtained for example when it is at least 22 cm in length and at least 42 cm in width. Heretofore, a transparent protective plate having a glass substrate having such a size is not necessarily easily bonded to the display main body, and bubbles are likely to form at the time of bonding. The transparent protective plate of the present invention, which has a glass substrate having such a size, in combination with the after-mentioned production process, can be particularly easily bonded, and further, by effective deflection of the transparent protective plate, formation of large bubbles can be suppressed. The above glass substrate is suitably used for a 20 inch television (24.9 cm in length × 44.2 cm in width). More remarkable effects can be obtained when the glass substrate has a size of at least 38 cm in length × 68 cm in width (for 32 inch television (39.8 cm in length × 70.6 cm in width)), and particularly remarkable effects can be obtained when it has a size of at least 50 cm in length × at least 90 cm in width (for 42 inch television (52.3 cm in length × 92.8 cm in width)).

Such a glass substrate may be one produced by a float process or may be one produced by a fusion process. Further, its composition is also not particularly limited so long as sufficient strength is achieved, however, preferred is a composition comprising, as calculated as oxides, from 60 to 80 mol% of SiO₂, from 0.5 to 7 mol% of Al₂O₃, from 3 to 10 mol% of MgO, from 6 to 9 mol% of CaO, from 0 to 5 mol% of SrO, from 0 to 4 mol% of BaO, from 0 to 2 mol% of ZrO₂, from 4 to 13 mol% of Na₂O and from 0.1 to 7 mol% of K₂O.

The pressure-sensitive adhesive layer is provided to bond the transparent protective plate to the display main body, comprises a pressure-sensitive adhesive having a pressure-sensitive adhesive strength of at least 0.1 N/25 mm as specified by JIS Z0237, and has a thickness of from 20 to 100 µm. If the pressure-sensitive adhesive strength is less than 0.1 N/25 mm, the transparent protective plate may be separated from the display main body due to insufficient pressure-sensitive adhesive strength. Further, even if the transparent protective plate is bonded to the display main body and the heat treatment is carried out by the after-mentioned production process, the bubbles may not be got rid of. Further, as the glass substrate becomes thicker, the weight per unit area increases, and the transparent proactive plate tends to be separated from the display main body. Accordingly, in a case where the thickness of the glass substrate is at least 1.0 mm, the pressure-sensitive adhesive strength is preferably at least 0.5 N/25 mm.

Further, the pressure-sensitive adhesive strength is preferably at most 30 N/25 mm, more preferably at most 15 N/25 mm, further preferably at most 7 N/25 mm, especially preferably at most 3 N/25 mm. The reason is as follows. That is, when the transparent protective plate is bonded to the display main body, foreign substances or a large amount of bubbles may enter into between the pressure-sensitive adhesive layer and the display main body. In such a case, it is necessary to separate the pressure-sensitive adhesive layer of the transparent protective plate from the display main body and bond them again. If the pressure-sensitive adhesive strength of the pressure-sensitive adhesive is too strong, it tends to be difficult to separate the transparent protective plate and the display main body without breaking them. Accordingly, the pressure-sensitive adhesive strength of the pressure-sensitive adhesive is preferably at most the above upper limit, whereby they can easily be separated as the case requires.

In order to more stably fix the transparent protective plate to the display main body, it is preferred that the transparent protective plate and the display main body are fixed by using a jig.

Such a pressure-sensitive adhesive may, for example, be an acrylic pressure-sensitive adhesive, a silicone pressure-sensitive adhesive, a butadiene pressure-sensitive adhesive or an urethane pressure-sensitive adhesive, and an acrylic pressure-sensitive adhesive is mentioned as a particularly suitable pressure-sensitive adhesive. The acrylic pressure-sensitive adhesive is a polymer containing as the main component acrylic monomer units. An acrylic monomer may be (meth)acrylic acid, itaconic acid, (anhydrous) maleic acid, (anhydrous) fumaric acid, crotonic acid, or an alkyl ester thereof. Here, "(meth)acrylic acid" generally means acrylic acid and methacrylic acid. The same applies to a (meth)acrylate.

The glass transition temperature Tg of the pressure-sensitive adhesive is preferably at most 0°C, more preferably at most -10°C. When the glass transition temperature Tg is at most 0°C, an appropriate pressure-sensitive adhesive strength at room temperature can be obtained, and favorable workability and the like when the transparent protective plate is bonded to the display main body can be obtained.

Further, the storage elastic modulus of the pressure-sensitive adhesive is preferably from 1×10³ to 1×10⁷ Pa. When the storage elastic modulus of the pressure-sensitive adhesive is from 1×10³ to 1×10⁷ Pa, in a case where the display main body and the transparent protective plate are bonded, and a heat treatment is carried out, by the after-mentioned production process, bubbles formed between them can effectively be got rid of. The storage elastic modulus of the pressure-sensitive adhesive is, with a view to more effectively getting rid of the bubbles, more preferably from 1×10³ to 1×10⁶ Pa, further preferably from 1.0×10⁴ to 1×10⁵ Pa, particularly preferably from 1×10⁴ to 5×10⁴ Pa.

The tanδ (loss tangent) of the pressure-sensitive adhesive is preferably from 0.01 to 0.4, more preferably from 0.1 to 0.4. When the tanδ of the pressure-sensitive adhesive is at most 0.4, defects in outer appearance such as an indentation and a dent which may occur at the time of handling in a room temperature environment can be prevented. When the tanδ is at least 0.01, an appropriate pressure-sensitive adhesive strength will be obtained, and bubbles can effectively be got rid of in the heat treatment step after bonding.

Further, if the thickness of the pressure-sensitive adhesive layer is less than 20 µm, the transparent protective plate may not effectively be bonded to the display main body since the pressure-sensitive adhesive layer is too thin. Further, even when the transparent protective plate is bonded to the display main body and a heat treatment is carried out by the after-mentioned production process, bubbles formed between them may not be got rid of. A thickness of 150 µm is sufficient from the viewpoint of effectiveness in bonding and with a view to getting rid of bubbles, and a thickness exceeding this is unfavorable, since the entire thickness of the transparent protective plate and the like tends to be too thick. The thickness of the pressure-sensitive adhesive layer is preferably at most 100 µm, more preferably from 25 to 80 µm, further preferably from 30 to 75 µm.

The transparent protective plate of the present invention essentially comprises the above glass substrate and pressure-sensitive adhesive layer, and may have a known functional layer which a transparent protective plate of this type has, between the glass substrate and the pressure-sensitive adhesive layer or on a side opposite to a side where the pressure-sensitive adhesive layer is provided of the glass substrate. Such a functional layer may, for example, be an antireflection layer, a contrast-improving layer, an electromagnetic wave shielding layer, a near infrared absorbing layer, or an interlayer to laminate such a layer. Such a functional layer is not necessarily laminated by itself, and may be laminated in a state where it is formed on a transparent substrate such as a resin film as mentioned hereinafter. Such a functional layer may be formed on the display main body.

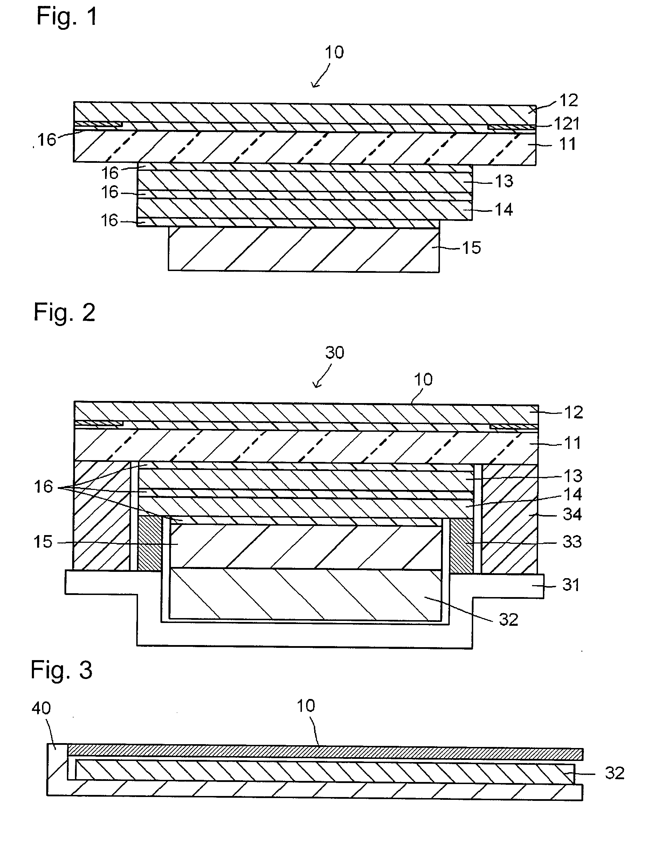

Fig. 1 is a cross-sectional view illustrating an example of a transparent protective plate of the present invention.

A transparent protective plate 10 shown in Fig. 1 comprises a glass substrate 11, and an antireflection film 12 having an antireflection layer laminated on the observer side of the glass substrate 11, and a contrast-improving film 13 having a contrast-improving layer, an electromagnetic wave shielding film 14 having an electromagnetic wave shielding layer and a pressure-sensitive adhesive film 15 having a pressure-sensitive adhesive layer laminated on the non-observer side. Each functional film is laminated and fixed via an interlayer 16.

The antireflection film 12 is one having an antireflection layer formed on a transparent substrate. On a principal surface opposite to a principal surface on which the antireflection layer is formed of the transparent substrate, for example, a black frame 121 may be formed by printing, which shields members such as a connector disposed around the periphery of an image display region of a display main body to provide good outer appearance. The transparent substrate is made of, for example, a polyester type resin such as polyethylene terephthalate or polybutylene terephthalate, a cellulose type resin such as triacetyl cellulose, an acrylic resin or a polycarbonate resin. Among them, polyethylene terephthalate or triacetyl cellulose may be mentioned as a preferred example from the viewpoint of the transparency and the processability.

The thickness of the transparent substrate is preferably from 10 to 500 µm, more preferably from 30 to 300 µm, further preferably from 50 to 200 µm. When the thickness of the transparent substrate is at least 10 µm, breakage such as fracture at the time of production can effectively be suppressed. Further, when the thickness of the transparent substrate is at most 500 µm, the processability will be improved, and the visible light transmittance can be made high, such being preferred.

The antireflection layer may be a laminate having an inorganic compound having a low reflective index and an inorganic compound having a high refractive index alternately laminated, a layer comprising an inorganic compound having a low refractive index, or a layer comprising a resin having a low refractive index. The resin having a low refractive index may, for example, be, a fluororesin, a silicone resin or a fluorosilicone resin. The inorganic compound having a low refractive index may, for example, be silicone dioxide. The antireflection layer may be preferably a layer comprising a resin having a low refractive index.

The antireflection film 12 is particularly preferably one having an antireflection layer made of a low refractive index material comprising a fluoropolymer formed on one surface of a polyethylene terephthalate film, and specifically, it may, for example, be ARCTOP (URP2199), tradename, manufactured by Asahi Glass Company, Limited or ReaLook (RLX1 000, RLX4000, RL7800 or RL91 00), tradename, manufactured by NOF Corporation. The low refractive index material is preferably one having a refractive index of from 1.1 to 1.6, more preferably from 1.2 to 1.5, further preferably from 1.3 to 1.48.

In the transparent protective plate 10, an antiglare layer which reduces the glare by reflection of visible light may be provided instead of the antireflection layer. As one having an antiglare layer, for example, ReaLook (RL5500), tradename, manufactured by NOF Corporation may, for example, be mentioned.

The contrast-improving film 13 is provided to impart a contrast-improving function to the transparent protective plate 10. The contrast-improving film 13 may, for example, be one having a plurality of linear dark portions aligned in parallel and translucent regions disposed between the dark portions formed on a transparent substrate. Each translucent region is, for example, in a trapezoidal form such that it gradually broadens toward the transparent substrate side in a cross-section in the alignment direction, and is formed so that it is connected to other adjacent translucent regions at the edge on the transparent substrate side. Further, each dark portion is constituted, for example, by filling a dent between adjacent translucent regions with dark particles and a transparent resin. As the transparent substrate for the contrast-improving film, a polyethylene terephthalate film is used.

The electromagnetic wave shielding film 14 is one, for example, having an electromagnetic wave shielding layer formed on a transparent substrate by a sputtering method. As the transparent substrate, for example, the same transparent substrate for the antireflection film 12 is used. The electromagnetic wave shielding layer may, for example, be one having n (wherein n is an integer of at least 1) metal layers (e.g. Ag or an Ag alloy) and n+1 metal oxide layers (e.g. an oxide of In and Sn, an oxide of Ti and Zn, an oxide of Al and Zn, or niobium oxide) alternately laminated. Further, the electromagnetic wave shielding film 14 may, for example, be one having copper formed in a mesh form as an electromagnetic wave shielding layer on a transparent substrate. Usually, such an electromagnetic wave shielding layer is produced by bonding a copper foil on a transparent substrate and forming the copper foil into a mesh form.

The pressure-sensitive adhesive film 15 is one having a pressure-sensitive adhesive layer formed on a transparent substrate. Here, the pressure-sensitive adhesive film 15 is disposed so that the pressure-sensitive adhesive layer side faces the display main body side, since it is necessary that the pressure-sensitive adhesive layer is bonded as contacted to the display main body. As the transparent substrate, for example, the same one as the transparent substrate for the antireflection film 12 may be used. Further, the pressure-sensitive adhesive film may be constituted only by a pressure-sensitive adhesive layer.

The pressure-sensitive adhesive layer may be formed, for example, by mixing a pressure-sensitive adhesive with a solvent to prepare a coating fluid, and applying it to the transparent substrate. The coating method is not particularly limited, and an optional coating method such as a dip coating method, a spray coating method, a spinner coating method, a bead coating method, a wire bar coating method, a blade coating method, a roller coating method, a curtain coating method, a slit die coating method, a gravure coating method, a slit reverse coating method, a microgravure coating method or a comma coating method may be employed.

Such a pressure-sensitive adhesive layer is preferably provided with a separator to protect the pressure-sensitive adhesive face. The separator is usually peeled immediately before bonding to the display main body. The separator is not limited so long as it can effectively protect the pressure-sensitive adhesive face and can readily be peeled as needed, and it may, for example, be one made of paper, or a resin film of e.g. polyethylene, polypropylene or polyethylene terephthalate.

Each interlayer 16 to bond each functional film comprises a pressure-sensitive adhesive such as an acrylic pressure-sensitive adhesive, a silicone pressure-sensitive adhesive, a butadiene pressure-sensitive adhesive or an urethane pressure-sensitive adhesive, and is particularly preferably one comprising an acrylic pressure-sensitive adhesive. Such an interlayer 16 is, for example, preliminarily formed into a functional film, which can be used at the time of bonding to the glass substrate 11 or another functional film. Further, the interlayer 16 can be formed, in the same manner as the pressure-sensitive adhesive layer, by preparing a coating fluid and applying it.

In the interlayer 16, various dyes for, for example, color compensation or near infrared absorption, so that it substantially functions as a color compensation layer or a near infrared absorption layer. The near infrared absorption dye may, for example, be a diimonium type dye, a phthalocyanine type dye, a dithiol complex type dye, a squarylium type dye or a tungsten oxide type dye.

A dye for color compensation or near infrared absorption is preferably contained, for example, in the interlayer 16 on the observer side of the glass substrate 11, i.e. on the side opposite to the side to which the display main body is bonded, whereby the glass substrate 11 can be utilized as a buffer layer against the heat transmitted from the display main body, and deterioration of the dye by heat can be suppressed. The dye may be contained also in the pressure-sensitive adhesive film.

Such a transparent protective plate 10 can be produced by bonding various functional films each having the interlayer 16 formed thereon to the glass substrate 11 in a predetermined order.

Bonding of each functional film to the glass substrate 11 can be carried out, for example, by overlaying each functional film on the glass substrate 1, and moving a press roller (outer diameter: 20 to 150 mm in diameter, preferably 25 to 75 mm in diameter) covered with an elastic material such as a rubber, from one edge side to the other edge side, for pressurization.

Further, after bonding by such a press roller, a heat treatment is carried out in an atmosphere at a temperature of from 30 to 90°C, preferably from 50 to 80°C, under a pressure of from 0.5 to 1.5 MPa, preferably from 0.7 to 1.0 MPa for from about 30 to about 90 minutes, preferably from 30 to 60 minutes, whereby bubbles between the functional films can be got rid of, and favorable outer appearance can be achieved.

Fig. 2 is a cross-sectional view illustrating one example of a flat panel display of the present invention.

A flat panel display 30, is for example, such that a display main body 32 is stored in a chassis 31, and a transparent protective 10 is bonded to the observer side of the display main body 32. Bonding of the transparent protective plate 10 to the display main body 32 is carried out by a pressure-sensitive adhesive layer which is not shown in the drawing. As the display main body 32, a plasma display main body may be mentioned as a preferred example, but it may be a liquid crystal display main body.

The flat panel display 30 is provided with, for example, a gasket 33 which conducts an electric current generated in an electromagnetic wave shielding film 14 (electromagnetic wave shielding layer) to a ground wire which is not shown in the drawing in the chassis 31. The gasket 33 is, for example, a spongy one of which the surface is made of an electrically conductive material, and secures electrical connection between the electromagnetic wave shielding film 14 (electromagnetic wave shielding layer) and the chassis 31 (ground wire) as being crushed between the electromagnetic wave shielding film 14 and the chassis 31.

Further, this flat panel display 30 is provided with a fixing part 34 to fix the glass substrate 11 of the transparent protective plate 10 to the chassis 31, outside the gasket 33. Such a fixing part 34 can suppress lifting up of the periphery of the transparent protective plate 10 by the repelling force of the gasket 33, which leads to peeling and separation of the respective layers of the transparent protective plate 10. Such a fixing part 34 may be one which can fix the glass substrate 11 of the transparent protective plate 10 to be within a certain distance from the chassis 31 against the repelling force of the gasket 33, and for example, a known double-coated tape may be used. Further, in a case where the electromagnetic wave shielding film is provided on the panel side, peeling can be suppressed, since the direction in which it is pressed by the gasket is opposite.

Production of such a flat panel display 30, particularly bonding of the transparent protective plate 10 to the display main body 32, can be suitably be carried out by the following procedure. That is, it can be suitably carried out by a disposing step of disposing the transparent protective plate 10 as being deflected to the display main body 32 side so that the pressure-sensitive adhesive layer faces the display main body 32 and that only one edge is in contact with the display main body 32, a bonding step of bringing the transparent protective plate 10 into contact with the display main body 32 gradually from the above one edge side to the other edge side while the transparent protective plate 10 is deflected to bond them, and a heat treatment step of subjecting the display main body 32 having the transparent protective plate 10 bonded thereto to a heat treatment in an atmosphere exceeding room temperature and exceeding normal pressure.

According to such a process, by using the transparent protective plate 10 of the present invention and bonding the transparent protective plate 10 as being deflected so that it is gradually brought into contact with the display main body 32 from one edge side to the other edge side, formation of large bubbles between the display main body 32 and the transparent protective plate 10 can be suppressed. Further, by carrying out a heat treatment after bonding, the bubbles formed between the display main body 32 and the transparent protective plate 10 can effectively be got rid of, in combination with the transparent protective plate 10 having a predetermined pressure-sensitive adhesive layer.

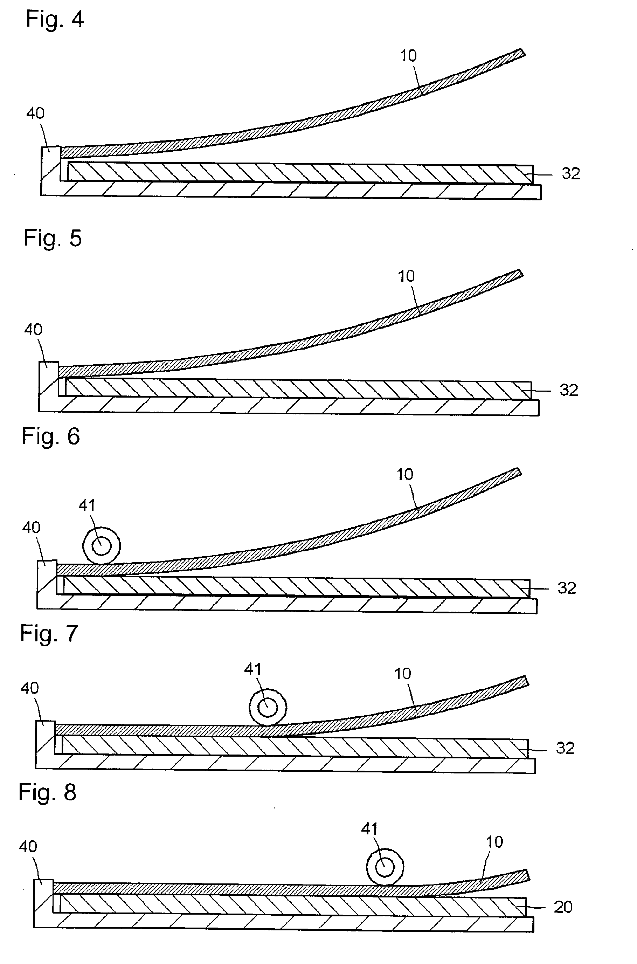

The disposing step can be carried out, for example, by using a member 40 for bonding as shown in Fig. 3. The member 40 for bonding has, for example, a flat portion on which the display main body 32 is to be placed, and a wall portion formed on one edge (the left side in the drawing) of the flat portion, which receives the transparent protective plate 10 and functions to temporarily fix it so that the transparent protect plate 10 will not move to the horizontal direction (the left side in the drawing). In the disposing step, first, the display main body 32 is disposed on the member 40 for bonding, and the transparent protective plate 10 is disposed so that the pressure-sensitive adhesive layer faces the display main body 32. Here, the pressure-sensitive adhesive layer is provided with a separator. Then, as shown in Fig. 4, while one edge of the transparent protective plate 10 is in contact with the wall portion of the member 40 for bonding, the other edge is lifted up. On that occasion, the entire transparent protective plate 10, particularly a portion deflected by its own weight should not be in contact with the display main body 32. In such a state, the separator is peeled from the pressure-sensitive adhesive layer, and only one edge is brought into contact with the display main body 32 as shown in Fig. 5.

The height the other edge of the transparent protective plate 10 is lifted up various depending upon the size of the transparent protective plate 10, and is preferably from about 150 to about 200 mm in a case where the transparent protective plate 10 has a size of 50 cm in length × 90 cm in width (for a 42 inch television (52.3 cm in length × 92.8 cm in width)) for example. When the height is at least 150 mm, it is possible to inhibit the portion deflected by its own weight from being in contact with the display main body 32. On the other hand, when the height is at most 200 mm, it is possible to effectively suppress breakage of the transparent protective plate 10 by e.g. pressurization in the subsequent bonding step.

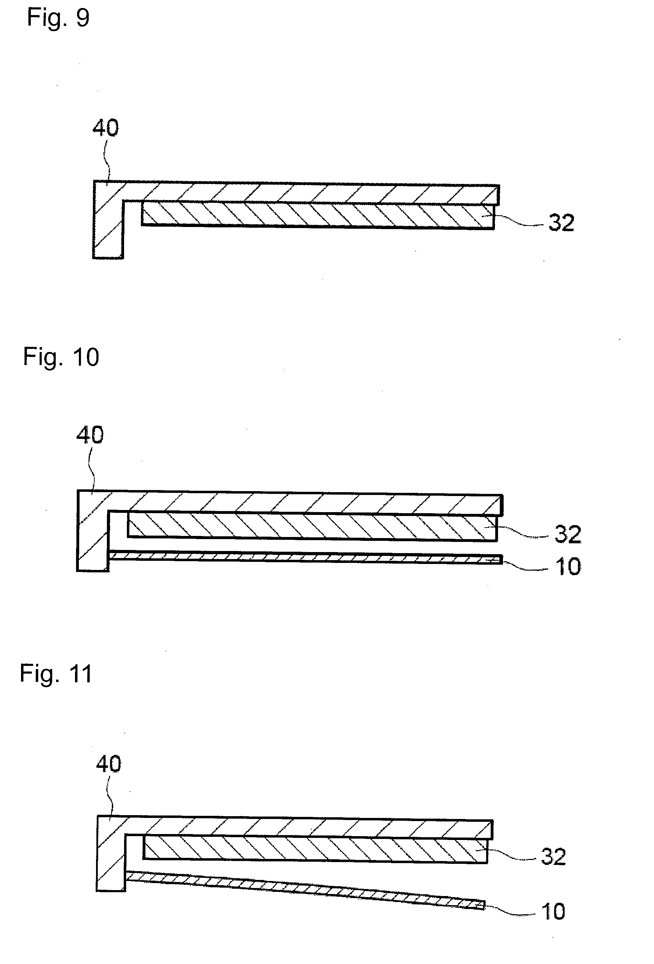

Further, as shown in Figs. 9 to 11, in a case where disposition of the display main body and the transparent protective plate is reversed from Figs. 3 to 5 in the vertical direction, the distance between the display main body and the transparent protective plate is properly kept by the deflection by the glass's own weight, and it is not necessary to lift up the other edge, such being favorable.

The bonding step is carried out, as shown in Figs. 6 to 8, by bringing the transparent protective plate 10 into contact with the display main body 32 gradually from one edge side to the other edge side while the transparent protective plate 10 is deflected to bond them. On that occasion, it is preferred to gradually lift down the other edge side of the transparent protective plate 10 as bonding of the display main body 32 and the transparent protective plate 10 proceeds, so that the transparent protective plate 10 will not be broken. Specifically, it is preferred to adjust the height so that bubbles will not remain between the display main body 32 and the transparent protective plate 10 and that the transparent protective plate 10 will not be broken e.g. by pressurization at the time of bonding.

Bonding is carried out particularly preferably by using a press roller 41 as shown in Figs. 6 to 8 or Figs. 12 to 14 and moving it from one edge side to the other edge side to pressurize the transparent protective plate 10. By such a method, formation of large bubbles can effectively be suppressed by excluding the air, and bonding can be carried out quickly. The rate of moving the press roller 41 varies depending upon e.g. the material of the pressure-sensitive adhesive layer and is not necessarily limited, and for example, it is preferably from 50 to 3,000 mm/min, more preferably from 600 to 1,500 mm/min.

When the moving rate is at most 1,500 mm/min, the pressure-sensitive adhesive layer of the transparent protective plate 10 is well fitted to the display main body 32 and formation of large bubbles can effectively be suppressed. Further, a moving rate of about 600 mm/min is sufficient to sufficiently fit the pressure-sensitive adhesive layer of the transparent protective plate 10 to the display main body 32, and by such a moving rate or higher, bonding can be carried out quickly.

The press roller 41 is preferably one having an outer diameter of from 20 to 150 mm in diameter, more preferably from 25 to 75 mm in diameter. Further, the press roller 41 is preferably covered with an elastic material such as a rubber.

When the outer diameter of the press roller 41 is at least 20 mm, defects in pressurization by e.g. deformation of the press roller 41 can effectively be suppressed. On the other hand, when the outer diameter is at most 80 mm, the linear pressure by the press roller 41 can be increased, whereby the transparent protective plate 10 can effectively be bonded to the display main body 32, and formation of large bubbles can effectively be suppressed.

Further, when the press roller is covered with an elastic material such as a rubber, the transparent protective plate 10 can effectively be bonded to the display main body 32 while breakage of the transparent protective plate 10 is suppressed. The covering material is preferably one having a rubber hardness degree of from 60 to 100 degrees, more preferably from 70 to 90 degrees, with a view to increasing the linear pressure by the press roller 41.

Further, the load applied to the press roller 41 is preferably from 490 to 1,961 N (from 50 to 200 kgf), more preferably from 1,079 to 1,373 N (from 110 to 140 kgf). When the load is at least 1,079 N, the transparent protective plate 10 can effectively be bonded to the display main body 32, and formation of large bubbles can effectively be suppressed. On the other hand, when the load is at most 1,373 N, breakage of the display main body 32 or the transparent protective plate 10 when the transparent protective plate 10 is bonded to the display main body 32 can effectively be suppressed.

In the heat treatment step, the display main body 32 having the transparent protective plate 10 bonded hereto is subjected to a heat treatment in an atmosphere exceeding room temperature and exceeding normal pressure. The heat treatment is particularly preferably carried out in an atmosphere at from 60 to 90°C under from 0.5 to 1.5 MPa for from about 30 to about 70 minutes. When the temperature is from 60 to 90°C, bubbles between the display main body 32 and the transparent protective plate 10 can effectively be got rid of, and deterioration of the dyes can effectively be suppressed. Further, when the pressure is from 0.5 to 1.5 MPa and the time is from 30 to 70 minutes, bubbles between the display main body 32 and the transparent protective plate 10 can effectively be got rid of, and sufficient productivity and the like are achieved. The heat treatment is more preferably carried out in an atmosphere at from 70 to 85°C under from 0.8 to 1.2 MPa for from about 40 to about 60 minutes.

The pressure-sensitive adhesive which bonds the panel and the glass substrate may be laminated on the panel side.

The preferred embodiments of the present invention have been described in detail above, however, the present invention is not limited to the above-described embodiments, and various changes and modifications are possible without departing from the intention and the scope of the present invention. For example, the above embodiments have been described with reference to a transparent protective plate for a plasma display, however, the transparent protective plate may also be used for a liquid crystal display. In such a case, unnecessary functional films are removed, and the transparent protective plate may be used as a decorating transparent protective plate.

### EXAMPLES

Now, the transparent protective plate of the present invention will be described in further detail with reference to Examples. However, it should be understood that the present invention is by no means restricted thereto.

### (Example 1)

A transparent protective plate was prepared by the following procedure.

A roll of an antireflection film (manufactured by NOF Corporation, "ReaLook 7800", tradename) was prepared, and a black frame for a 42 inch size display was printed by a gravure printing method on a principal surface opposite to a principal surface on which an antireflection layer was formed. On that occasion, the thickness of the black frame was about 4.5 µm. On the principal surface having the black frame formed thereon, a pressure-sensitive adhesive made of an acrylic resin containing coloring dyes for color compensation of the plasma display and for near infrared absorption was laminated in a thickness of 25 µm to form an interlayer. As the coloring dyes, a neon cutting dye (manufactured by Yamada Kagaku, "TAP2", tradename), color compensation dyes (manufactured by Nippon Kayaku Co., Ltd. Co., Ltd., "KAYASORB VIOLET A-R", "KAYASORB GREEN A-B", tradenames), near infrared absorbing dyes (manufactured by NIPPON SHOKUBAI CO., LTD., "IR-14", "IR-20" and "IR-915", tradenames) and the like were used, to adjust the luminous transmittance of the transparent protective plate to be 35% and the near infrared transmittance (wavelength: 850 nm to 950 nm) to be at most 15%.

Further, a pressure-sensitive adhesive made of an acrylic resin was laminated on both sides of a PET film (manufactured by TOYOBO CO., LTD., "COSMOSHINE A4300", tradename, thickness: 100 µm), to prepare a pressure-sensitive adhesive film (double-coated pressure-sensitive adhesive film) to bond a transparent protective plate to a display main body. An acrylic pressure-sensitive adhesive A (manufactured by LINTEC Corporation, "P0280", tradename) was laminated in a thickness of 30 µm on the principal surface to be on the display main body side of the PET film to form a pressure-sensitive adhesive layer, and on the other principal surface, a transparent pressure-sensitive adhesive was laminated in a thickness of 25 µm to form an interlayer.

Further, a chamfered and chemically tempered glass substrate (thickness: 0.7 mm) having dimensions for a 42 inch television was prepared. The above antireflection film having a black frame was bonded to the observer side of the glass substrate, and a contrast-improving film (manufactured by Dai Nippon Printing Co., Ltd., "CRF AOP51T48-4201", tradename), an electromagnetic wave shielding etching mesh film (manufactured by TOPPAN PRINTING CO., LTD., "TPT18A1-E4206", tradename) and the pressure-sensitive adhesive film were bonded to the non-observer side in this order. To bond the contrast-improving film and the electromagnetic wave shielding film, a pressure-sensitive adhesive (thickness: 25 µm) made of a transparent acrylic resin was used. Further, for bonding, a press roller (outer diameter: 75 mm in diameter, rubber hardness degree: 70 degrees) covered with a rubber was used. After bonding, an autoclave treatment (60 minutes) at a temperature of 60°C under a pressure of 0.95 MPa was applied to obtain a transparent protective plate.

Then, the transparent protective plate was bonded to a display main body to prepare a flat panel display. First, as shown in Fig. 3, a 42 inch plasma display main body (plasma display panel) was disposed on a member for bonding, and the transparent protective plate was disposed thereon. Then, as shown in Fig. 4, one edge of the transparent protective plate was brought into contact with a wall portion of the member for bonding and at the same time, the other edge was lifted up and a separator bonded to the transparent protective plate was peeled. Further, as shown in Fig. 5, the other edge of the transparent protective plate was lifted down to a height such that the transparent protective plate deflected by its own weight was not in contact with the display main body. The distance between the display main body and the transparent protective plate (the other edge) was from 150 to 200 mm.

Then, as shown in Figs. 6 to 8, a press roller having an outer diameter of 80 mm covered with a rubber was put down on one edge of the transparent protective plate and moved to the other edge side while being rotated with a load applied thereto, to bond the display main body and the transparent protective plate while the air between them was excluded. The load to the press roller was from 1,079 to 1,373 N (from 110 to 140 kgf), and the moving rate was from 600 to 1,500 mm/min. Further, the height of the other edge of the transparent protective plate was lifted down in conformity with moving of the press roller, so that the height became 0 mm at a time where the press roller reached the other edge side. The display main body having the transparent protective plate bonded thereto was subjected to an autoclave treatment (heat treatment) at a temperature of 80°C under a pressure of 0.95 MPa for 50 minutes to prepare a flat panel display.

### (Example 2)

A transparent protective plate and a flat panel display were prepared in the same manner as in Example 1 except that the thickness of the glass substrate was changed to 1.1 mm and the thickness of the acrylic pressure-sensitive adhesive A was changed to 50 µm.

### (Example 3)

A transparent protective plate and a flat panel display were prepared in the same manner as in Example 1 except that the thickness of the glass substrate was changed to 1.1 mm and the acrylic pressure-sensitive adhesive A was changed to a pressure-sensitive adhesive B made of an acrylic resin (manufactured by LINTEC Corporation, "LS026", tradename).

### (Example 4)

A transparent protective plate and a flat panel display were prepared in the same manner as in Example 1 except that the thickness of the glass substrate was changed to 1.1 mm, the acrylic pressure-sensitive adhesive A was changed to the pressure-sensitive adhesive B made of an acrylic resin and the thickness of the pressure-sensitive adhesive B was 50 µm.

### (Example 5)

A transparent protective plate and a flat panel display were prepared in the same manner as in Example 1 except that the thickness of the glass substrate was changed 1.8 mm, the acrylic pressure-sensitive adhesive A was changed to the pressure-sensitive adhesive B made of an acrylic resin and the thickness of the pressure-sensitive adhesive B was 75 µm.

### (Example 6)

A transparent protective plate and a flat panel display were prepared in the same manner as in Example 1 except that the thickness of the glass substrate was changed to 1.1 mm.

### (Example 7)

A transparent protective plate and a flat panel display were prepared in the same manner as in Example 1 except that the thickness of the glass substrate was changed to 0.5 mm.

### (Example 8)

A transparent protective plate and a flat panel display were prepared in the same manner as in Example 1 except that the acrylic pressure-sensitive adhesive A was changed to an acrylic pressure-sensitive adhesive C (manufactured by FUJIMORI KOGYO CO., LTD., "ZACROS TR120-050", tradename) and the thickness of the pressure-sensitive adhesive C was 50 µm.

### (Example 9)

A transparent protective plate and a flat panel display were prepared in the same manner as in Example 1 except that the acrylic pressure-sensitive adhesive A was changed to a silicone pressure-sensitive adhesive D (manufactured by TOYOHOZAI Co., Ltd., "DFT-38", tradename) and the thickness of the pressure-sensitive adhesive D was 50 µm.

### (Example 10)

A transparent protective plate was prepared in the same manner as in Example 2. Then, the transparent protective plate was bonded to a display main body to prepare a flat panel display.

First, as shown in Fig. 9, a 42 inch plasma display main body (plasma display panel) was disposed so that the panel surface faced downward. Then, a separator bonded to the transparent protective plate was peeled, and as shown in Fig. 10, the transparent protective plate was disposed in parallel on the underside of the panel so that the pressure-sensitive adhesive of the transparent protective plate faced the panel surface. Then, as shown in Fig. 11, one edge of the transparent protective plate was fixed to one edge of the panel in such a manner that the other edge of the transparent protective plate would not be in contact with the display main body by deflection by its own weight. On that occasion, the distance between the display main body and the transparent protective plate (the other edge) was from 15 to 50 mm.

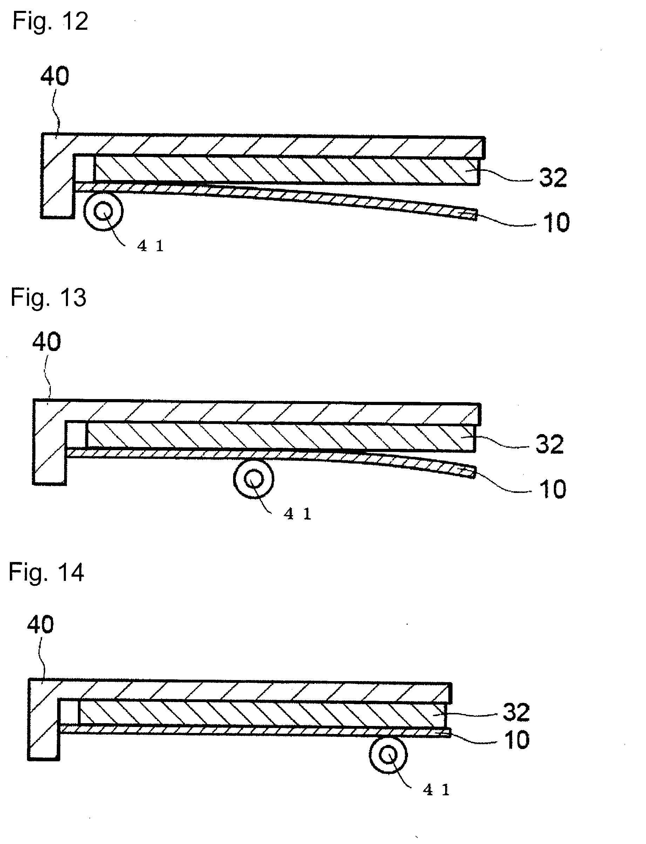

Then, as shown in Figs. 12 to 14, a press roller having an outer diameter of 80 mm covered with a rubber was pressed against one edge of the transparent protective plate from the downward direction, and moved to the other edge side while being rotated with a load applied thereto, to bond the display main body and the transparent protective plate while the air between them was excluded. The load to the press roller was from 1,079 to 1,373 N (from 110 to 140 kgf), and the moving rate was from 600 to 1,500 mm/min. Further, the height of the other edge of the transparent protective plate was lifted up in conformity with moving of the press roller so that the gap generated by deflection by glass's own weight at a point where the press roller reached the other edge side became 0 mm. The display main body having the transparent protective plate bonded thereto was subjected to an autoclave treatment (heat treatment) at a temperature of 80°C under a pressure of 0.95 MPa for 50 minutes to prepare a flat panel display.

### (Example 11)

A chamfered and chemically tempered glass substrate (thickness: 1.1 mm) having dimensions for a 42 inch display was prepared. An antireflection film having a black frame and a pressure-sensitive adhesive film, each prepared in the same manner as in Example 1, were bonded respectively to the observed side and the non-observer side of the glass substrate to obtain a transparent protective plate.

Further, a contrast-improving film (manufactured by Dai Nippon Printing Co., Ltd., "CRF AOP51T48-4201", tradename) was bonded to an electromagnetic wave shielding etching mesh film (manufactured by TOPPAN PRINTING CO., LTD., "TPT18A1-E4206", tradename). To bond the contrast-improving film and the electromagnetic wave shielding film, a pressure-sensitive adhesive (thickness: 25 µm) made of a transparent acrylic resin was used. After bonding, an autoclave treatment at a temperature of 60°C under a pressure of 0.95 MPa for 50 minutes was applied. Then, the resulting laminate was bonded to a display panel so that the electromagnetic wave shielding film was in contact with the display panel. To bond them, a press roller (outer diameter: 75 mm in diameter) covered with a rubber was used.

In the same manner as in Example 1, the transparent protective plate was bonded to the display main body to prepare a flat panel display.

### (Example 12)

A chamfered and chemically tempered glass substrate (thickness: 1.1 mm) having dimensions for a 42 inch display was prepared. An antireflection film having a black frame prepared in the same manner as in Example 1 was bonded to the observer side of the glass substrate, and a contrast-improving film (manufactured by Dai Nippon Printing Co., Ltd., "CRF AOP51T48-4201", tradename) and a pressure-sensitive adhesive film prepared in the same manner as in Example 2 were bonded to the non-observer side in this order to obtain a transparent protective plate. Then, the transparent protective plate was bonded to a display main body in the same manner as in Example 1 to prepare a flat panel display.

### (Example 13)

A chamfered and chemically tempered glass substrate (thickness: 1.1 mm) having dimensions for a 42 inch display was prepared. A black frame was formed on the non-observer side of the glass substrate with a black ink by screen printing. On that occasion, the thickness of the black frame was about 4.5 µm. To the observer side, an antireflection film (manufactured by NOF Corporation, "ReaLook 7800", tradename) was bonded by using as an interlayer a transparent acrylic pressure-sensitive adhesive having a thickness of 25 µm, to obtain a glass substrate provided with functional layer.

A pressure-sensitive adhesive film (manufactured by LINTEC Corporation, "LS026", tradename, thickness: 50 µm) made of an acrylic resin containing coloring dyes for color compensation for a plasma display and for near infrared absorption was prepared to obtain a pressure-sensitive adhesive film. As the coloring dyes, a neon cutting dye (manufactured by Yamada Kagaku, "TAP2", tradename), color compensation dyes (manufactured by Nippon Kayaku Co., Ltd., "KAYASORB VIOLET A-R", "KAYASORB GREEN A-B", tradenames), near infrared absorption dyes (manufactured by NIPPON SHOKUBAI CO., LTD., "IR-14", "IR-20", "IR-915", tradenames) and the like were used, to adjust the luminous transmittance of the transparent protective plate to be 35% and the near infrared transmittance (wavelength: 850 nm to 950 nm) to be at most 15%. The above pressure-sensitive adhesive was prepared in a state sandwiched between two separators.

An electromagnetic wave shielding etching mesh film (manufactured by TOPPAN PRINTING CO., LTD., "TPT18A1-E4206", tradename), a contrast-improving film (manufactured by Dai Nippon Printing Co., Ltd., "CRF AOP51T48-4201", tradename) and the above pressure-sensitive adhesive film having a thickness of 50 µm containing the coloring dyes were bonded in this order. To bond the contrast-improving film and the electromagnetic wave shielding film, a pressure-sensitive adhesive (thickness: 25 µm) made of a transparent acrylic resin was used. Further, for bonding, a press roller covered with a rubber was used. After bonding, an autoclave treatment was carried out at a temperature of 60°C under a pressure of 0.95 MPa, and the resulting laminate was bonded to a display panel so that the electromagnetic wave shielding film was in contact with the display panel.

Then, the glass substrate provided with functional layer was bonded to the display main body to prepare a flat panel display. First, in the same manner as shown in Fig. 3, on a member for bonding, the 42 inch plasma display main body (plasma display panel) having the films bonded thereto was disposed, and the separator bonded to the pressure-sensitive adhesive layer on the panel was peeled. The transparent protective plate was disposed thereon, and in the same manner as shown in Fig. 4, one edge of the transparent protective plate was brought into contact with a wall portion of the member for bonding, and in the same manner as shown in Fig. 5, the other edge of the transparent protective plate was lifted up to a height such that the transparent protective plate deflected by its own weight would not be in contact with the display main body. On that occasion, the distance between the display main body and the transparent protective plate (the other edge) was from 150 to 200 mm.

Then, in the same manner as shown in Figs. 6 to 8, a press roller having an outer diameter of 80 mm covered with a rubber was put down on one edge of the transparent protective plate, and moved to the other edge side while being rotated with a load applied thereto, to bond the display main body and the transparent protective plate while the air between them was excluded. The load to the press roller was from 1,079 to 1,373 N (from 110 to 140 kgf) and the moving rate was from 600 to 1,500 mm/min. Further, the height of the other edge of the transparent protective plate was lifted down in conformity with movement of the press roller so that the height became 0 mm at a time were the press roller reached the other edge side. The display main body having the transparent protective plate bonded thereto was subjected to an autoclave treatment (heat treatment) at a temperature of 80°C under a pressure of 0.95 MPa for 50 minutes to prepare a flat panel display.

### (Comparative Example 1)

A transparent protective plate and a flat panel display were prepared in the same manner as in Example 1 except that the thickness of the acrylic pressure-sensitive adhesive A was changed to 15 µm.

### (Comparative Example 2)

A transparent protective plate and a flat panel display were prepared in the same manner as in Example 1 except that the thickness of the glass substrate was changed to 2.5 mm, the acrylic pressure-sensitive adhesive A was changed to the acrylic pressure-sensitive adhesive B, and the thickness of the acrylic pressure-sensitive adhesive B was 50 µm.

### (Comparative Example 3)

A transparent protective plate was prepared in the same manner as in Example 1 except that instead of the pressure-sensitive adhesive film (double-coated pressure-sensitive adhesive film) having a pressure-sensitive adhesive layer and an interlayer, a single-coated pressure-sensitive adhesive film (having no pressure-sensitive adhesive layer) comprising a PET film (manufactured by TOYOBO CO., LTD., "COSMOSHINE A4300", tradename, thickness: 100 µm) and a pressure-sensitive adhesive (thickness: 25 µm) made of an acrylic resin as an interlayer laminated on one side of the PET film was used, and the thickness of the glass substrate was changed to 1.1 mm.

A PVB hot melt sheet E (manufactured by SEKISUI CHEMICAL CO., LTD., "S-LEC", tradename) as an adhesive sheet was cut into a size smaller by about 5 mm in lengthwise and crosswise directions than a display main body. This PVB hot melt sheet was interposed between a display main body and the transparent protective plate, temporarily fixed with a heat resistant tape at 8 portions around its periphery, put in a PET bag with an exhaust port, and sealed. The bag was depressurized to 0.053 MPa (400 Torr) by a vacuum pump and heated in a heating oven to 80°C over a period of one hour. The bag was held at this temperature for 20 minutes, and further heated to 120°C over a period of 40 minutes while the degree of vacuum was maintained, and maintained at this temperature for 20 minutes. Then, at a point where the bag was cooled to 80°C, the pressure was recovered, the bag was cooled to room temperature, and then the resulting flat panel display was taken out from the PET bag.

### (Comparative Example 4)

A transparent protective plate and a flat panel display were prepared in the same manner as in Comparative Example 3 except that the thickness of the glass substrate was changed to 2.5 mm.

With respect to such flat panel displays in Examples and Comparative Examples, presence or absence of bubbles between the display main body and the transparent protective plate was evaluated. The results are shown in Table 1.

Presence or absence of bubbles was confirmed immediately after the transparent protective plate was bonded to the display main body (before the heat treatment) and after the autoclave treatment (after the heat treatment). Further, presence or absence of bubbles was confirmed by visual observation, and in a case where bubbles having diameters of at least 0.5 mm were not present was rated as ○, and a case where such bubbles were present as ×.

Further discoloration of the transparent protective plate in preparation of the flat panel display was evaluated. For the evaluation, evaluation glass (thickness: 2.5 mm) was prepared as a substitute of the display main body, the transparent protective plate was bonded to the evaluation glass under the above conditions, and the transmittance was measured by an ultraviolet visible near infrared spectrophotometer (manufactured by Shimadzu Corporation, "Solid-Spec 3700", tradename). In Comparative Examples 3 and 4, measurement was carried out with respect to the transparent protective plate by itself before bonding. The measurement range was from 380 to 780 nm. Then, a heat treatment was carried out, and then the transmittance was measured again. From the results of measurement of the transmittances, chromaticities y were obtained based on JIS Z8701, and their difference was regarded as Δy. The results are shown in Table 1. A case where Δy is less than 0.015 was rated as ○, and a case where it was at least 0.015 was rated as ×.

Further, the transparent protective plate and the display main body were bonded, and whether the transparent protective plate can be peeled off without breakage after the heat treatment, was evaluated. A case where the transparent protective plate could be peeled off without breakage of both the transparent protective plate and the display main body was rated as ○, a case where the transparent protective plate was broken and the display main body was not broken as Δ, and a case where both the transparent protective plate and the display main body were broken, or the transparent protective plate could not be peeled off, as x.

In Table 1, the thickness of the glass substrate, the thickness of the pressure-sensitive adhesive layer, the type and the properties of the pressure-sensitive adhesive, etc., are shown. The thickness of the glass substrate was measured by a caliper, and the thickness of the pressure-sensitive adhesive layer was measured by a micrometer. Further, the pressure-sensitive adhesive strength was measured based on JIS Z0237. On that occasion, the thickness of the pressure-sensitive adhesive was 25 µm, the test plate was soda lime glass, and a 2 kg pressure roller was used. After contact bonding, the sample was left at rest at room temperature one day and then measurement was conducted.

With respect to the elastic modulus and the tanδ of the pressure-sensitive adhesive, a pressure-sensitive adhesive sheet having a thickness of 25 µm not laminated on a substrate was prepared, such pressure-sensitive adhesive sheets were overlaid until a thickness of 400 µm was achieved, to prepare a 30 mm square sample. With respect to this sample, the dynamic viscoelasticity was measured by a rheometer (manufactured by TA Instruments Japan Inc., "AR2000ex", tradename). Measurement was carried out by a temperature-increasing mode within a range of from 0°C to 100°C, and the storage elastic modulus at 23°C and the value of the tanδ at 80°C were calculated.

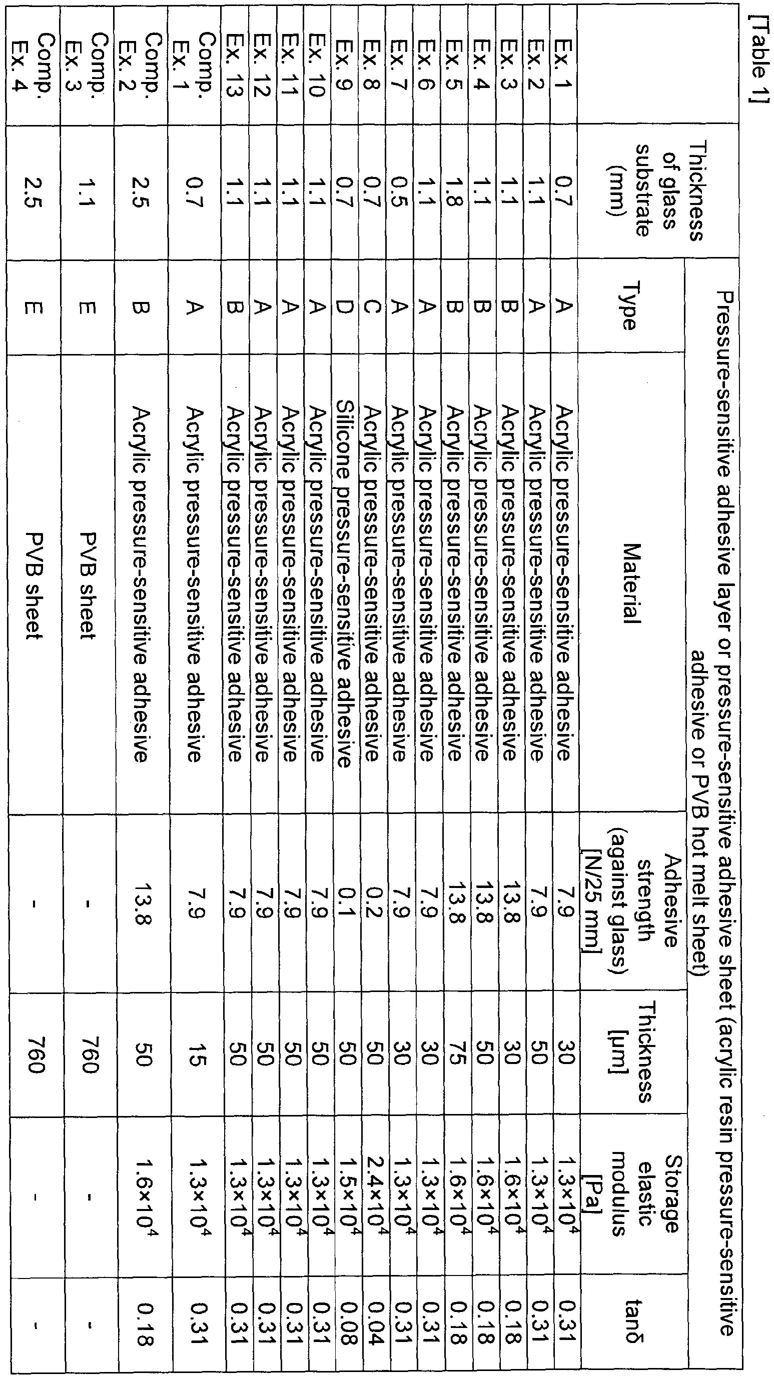

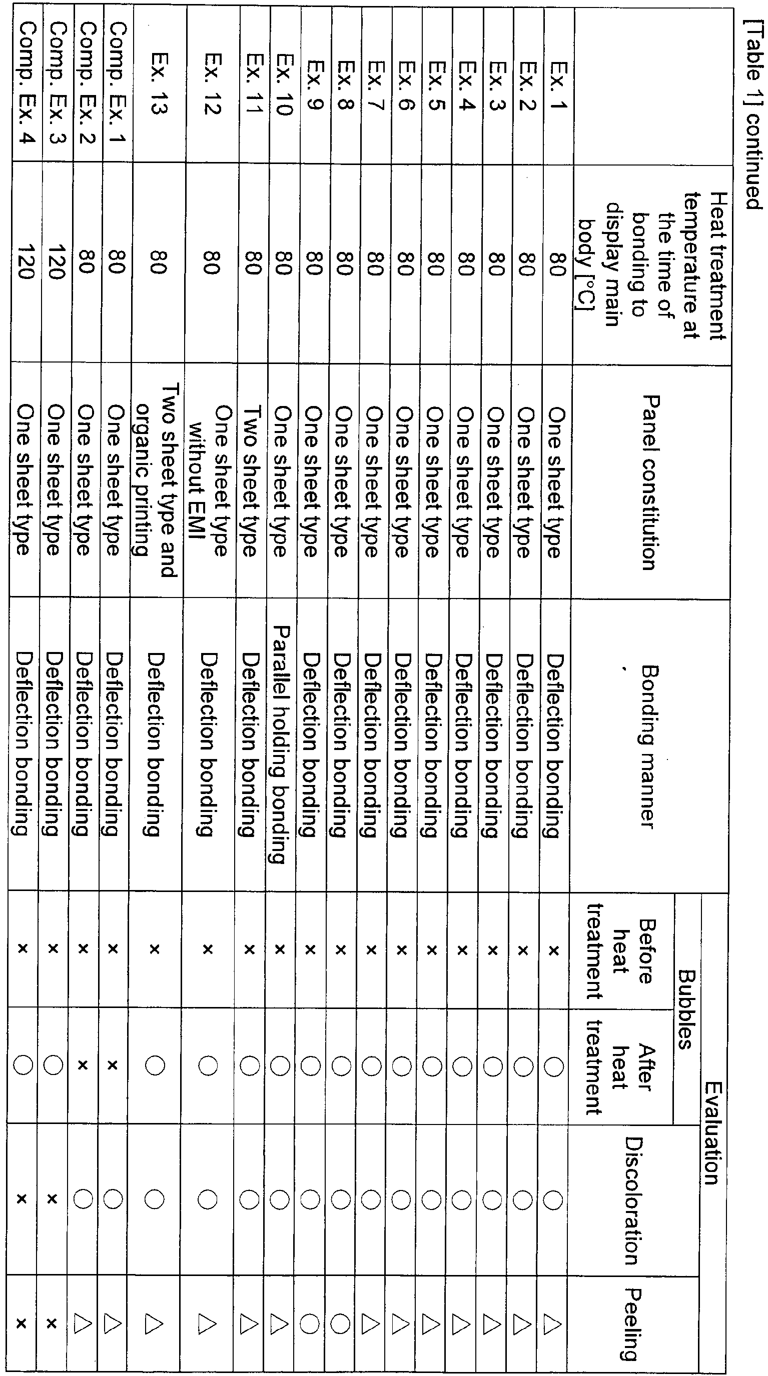

In the Table, regarding the panel constitution, "one sheet type" represents a structure such that all the functional films were bonded to the transparent protective plate, and "two sheet type" represents a structure such that the functional films were bonded to both of the transparent protective plate and the display panel.

Further, "without EMI" represents that there was no electromagnetic wave shielding function, and "organic printing" means that a black frame was formed by screen printing.

Further, regarding the bonding manner, "deflection bonding" means a method of contacting the transparent protective plate while being deflected from above the panel, as shown in Figs. 6 to 8, and "parallel holding bonding" means a method of contacting the transparent protective plate from below the panel as shown in Figs. 9 to 11.

As shown in Examples 1 to 7, it is found that by using a predetermined transparent protective plate and bonding it to a display main body while deflecting it, bubbles between the display main body and the transparent protective plate immediately after bonding can be made small, the bubbles can be got rid of by the subsequent autoclave treatment (heat treatment), and further, favorable outer appearance can be obtained. Further, it is found that by using a predetermined transparent protective plate, a heat treatment at such a high temperature as higher than 100°C is unnecessary, and discoloration of the transparent protective plate can be suppressed.

It is found from Example 8 that by using a pressure-sensitive adhesive layer having a small pressure-sensitive adhesive strength, the transparent protective plate and the display main body can be separated without breakage of both of them.

Whereas, in Comparative Example 1, since the pressure-sensitive adhesive was too thin, bubbles could not be got rid of even by carrying out a heat treatment. In Comparative Example 2, the glass substrate was too thick, whereby the deflection of the transparent protective plate was small, and deformation of the glass substrate by the linear pressure of the press roller was small, and therefore large bubbles were formed between the display main body and the transparent protective plate immediately after bonding, and the bubbles could not be got rid of even by carrying out a heat treatment. In Comparative Examples 3 and 4, the operation was complicated since the transparent protective plate was bonded by using a PVB hot melt sheet, and since a heat treatment at high temperature exceeding 100°C was necessary, the dyes contained in the transparent protective plate were deteriorated, thus leading to discoloration.

### INDUSTRIAL APPLICABILITY

The transparent protective plate of the present invention can easily be attached to a display main body, and can suppress deterioration of properties at the time of attaching, and by using this transparent protective plate, a flat panel display having favorable outer appearance and properties can easily be produced, and accordingly it is industrially useful.

The entire disclosure of Japanese Patent Application No. 2010-257235 filed on November 17, 2010 including specification, claims, drawings and summary is incorporated herein by reference in its entirety.

### REFERENCE SYMBOLS

10: Transparent protective plate
11: Glass substrate
12: Antireflection film having antireflection layer
13: Contrast-improving film having contrast-improving layer
14: Electromagnetic wave shielding film having electromagnetic wave shielding layer
15: Pressure-sensitive adhesive film having pressure-sensitive adhesive layer
16: Interlayer
30: Flat panel display
31: Chassis
32: Display main body
33: Gasket
34: Fixing portion
40: Member for bonding
41: Press roller
121: Black frame

## Claims

1. A transparent protective plate to be bonded to a display surface of a display main body of a flat panel display, which comprises:
a glass substrate having a thickness of from 0.5 to 1.8 mm, and
a pressure-sensitive adhesive layer having a thickness of from 20 to 150 µm, comprising a pressure-sensitive adhesive having a pressure-sensitive adhesive strength of at least 0.1 N/25 mm as specified by JIS Z0237, laminated directly or indirectly on the side to be bonded to the display surface of the glass substrate.

2. The transparent protective plate according to Claim 1, which has a size of at least 22 cm in length and at least 42 cm in width.

3. The transparent protective plate according to Claim 1 or 2, wherein the storage elastic modulus of the pressure-sensitive adhesive is from 1×10³ to 1×10⁷ Pa.

4. The transparent protective plate according to any one of Claims 1 to 3, wherein the pressure-sensitive adhesive is an acrylic or silicone pressure-sensitive adhesive, and has a glass transition temperature Tg of at most 0°C.

5. The transparent protective plate according to any one of Claims 1 to 4, wherein the tanδ of the pressure-sensitive adhesive is from 0.01 to 0.4.

6. A flat panel display, which comprises the transparent protective plate as defined in any one of Claims 1 to 5 bonded to a display surface of a display main body.

7. A process for producing a flat panel display by bonding the transparent protective plate as defined in any one of Claims 1 to 5 to a display surface of a display main body, which comprises:
a disposing step of disposing the transparent protective plate as being deflected on the display main body side so that the pressure-sensitive adhesive layer faces the display main body and that only one edge is in contact with the display main body;
a bonding step of bringing the transparent protective plate into contact with the display main body gradually from the above one edge side to the other edge side while the transparent protective plate is deflected to bond them; and
a heat treatment step of subjecting the display main body having the transparent protective plate bonded thereto to a heat treatment in an atmosphere exceeding room temperature and exceeding normal pressure.

8. The process for producing a flat panel display according to Claim 7, wherein the bonding is carried out by pressurizing the transparent protective plate by a press roller and moving the press roller from the above one edge side to the other edge side.

9. The process for producing a flat panel display according to Claim 8, wherein the load to the press roller is from 1,079 to 1,373N.

10. The process for producing a flat panel display according to Claim 8, wherein the rate of moving the press roller is from 600 to 1,500 mm/min.

11. The process for producing a flat panel display according to any one of Claims 7 to 10, wherein the heat treatment step is carried out at a temperature of from 60 to 90°C under a pressure of from 0.5 to 1.5 MPa.
